# EUROPÄISCHE PATENTSCHRIFT

(11) **EP 3 155 274 B1**
(45) Veröffentlichungstag und Bekanntmachung des Hinweises auf die Patenterteilung: **24.10.2018**
(21) Anmeldenummer: 15738846.3
(22) Anmeldetag: 09.06.2015
(51) Int. Cl.: F16B 37/00

(54) **HOCHFESTE BEFESTIGUNGSVORRICHTUNG**
HIGH-STRENGTH FASTENING DEVICE
DISPOSITIF DE FIXATION À HAUTE RÉSISTANCE

(30) Priorität: 10.06.2014 DE 102014008166
(43) Veröffentlichungstag der Anmeldung: 19.04.2017
(73) Patentinhaber: FIREP Rebar Technology GmbH, 40549 Düsseldorf (DE)
(72) Erfinder: TSUKAMOTO, Kenichi, 40667 Meerbusch (DE)
(74) Vertreter: Schrooten, Rolf
(86) Internationale Anmeldenummer: PCT/EP2015/062865
(87) Internationale Veröffentlichungsnummer: WO 2015/189225

(56) Entgegenhaltungen:
- EP-A1- 1 975 422
- AT-B- 386 444
- DE-A1- 2 537 649

## Beschreibung

Die vorliegende Erfindung betrifft eine Befestigungsvorrichtung nach dem Oberbegriff von Anspruch 1. Sie dient zur Befestigung eines mit einer Öffnung versehenen Montageelementes an einem die Öffnung des Montageelementes durchgreifenden Gewindebolzen. Dazu umfasst die Befestigungsvorrichtung einerseits eine Mutter mit einer Gewindebohrung zum Aufschrauben auf ein Außengewinde eines Gewindebolzens, und andererseits ein mit der Mutter zusammenwirkendes Spannelement mit einer Öffnung bzw. Bohrung. Das Spannelement ist dabei dazu bestimmt, die von einem in die Mutter einschraubbaren Gewindebolzen in zumindest einer axialen Richtung auf die Mutter ausübbaren Axialkräfte auf ein Montageelement zu übertragen, welches den Gewindebolzen umgibt. Von dem Montageelement können die Kräfte dann an weitere Elemente übertragen werden.

Die Mutter der Befestigungsvorrichtung hat außenseitig einen konusförmigen Auflagebereich, mit dem sie im montierten Zustand zumindest teilweise in die Öffnung bzw. Bohrung des Spannelements eingreift und dort an einem komplementären Innenkonus aufliegt, den das Spannelement an zumindest einem Teilbereich seiner Öffnung bzw. Bohrung aufweist. Zur Erhöhung der Tragfähigkeit und zur Erzielung höherer Festigkeitswerte weist die Mutter mindestens einen Schlitz auf, der die Mutterwandung über einen Teilbereich ihrer axialen Erstreckung unterbricht.

Eine derartige Befestigungsvorrichtung ist in der speziellen Ausgestaltung als Ankermutter an einem Zuganker aus der DE 10 2010 024 352 A1 bekannt. Das Spannelement ist dort durch einen Sitzring gebildet, welcher die von dem Zuganker ausgeübten Zugkräfte über ein hier durch eine Ankerplatte gebildetes Montageelement an den die Ankerbohrung umgebenden Untergrund überträgt.

Ferner ist es bei Ankerköpfen für Zuganker beispielsweise aus der DE 20 2008 003 381 U1 bekannt, eine herkömmliche Ankermutter ohne Schlitz vorzusehen, die mit einem konusförmigen Auflagebereich im montierten Zustand in die Öffnung einer Ankerplatte eingreift und dort an einem komplementären Innenkonus der Ankerplatte aufliegt.

Aus der AT 135 919 B ist außerdem eine Ankermutter bekannt, deren Wandung an einer Stelle ihres Umfangs über die gesamte Höhe der Ankermutter durch einen Schlitz unterbrochen ist.

Außerdem ist aus der erst nach dem Prioritätsdatum der vorliegenden Anmeldung veröffentlichten DE 10 2013 002 734 A1 eine Befestigungsvorrichtung zur Befestigung eines Montageelementes an einem Gewindebolzen bekannt, die als Ankerkopf zur Verankerung eines Zugankers an der Luftseite einer Ankerbohrung ausgeführt ist. Dieser Ankerkopf umfasst eine Ankermutter mit einer Gewindebohrung zum Aufschrauben auf ein Ankergewinde eines Zugankers und eine mit der Ankermutter zusammenwirkende Ankerplatte mit einer Ankerplattenöffnung, die dazu bestimmt ist, die von einem eingeschraubten Zuganker auf die Ankermutter ausübbaren Zugkräfte auf einen die Ankerbohrung umgebenden Untergrund zu übertragen. Die Ankermutter hat einen konusförmigen Auflagebereich, mit dem sie im montierten Zustand zumindest teilweise in die Ankerplattenöffnung der Ankerplatte eingreift und dort an einem komplementären Innenkonus aufliegt, den die Ankerplatte im Bereich der Ankerplattenöffnung aufweist. Die Ankermutter weist mindestens einen achsparallel verlaufenden Schlitz auf, der die Mutterwandung über einen Teilbereich ihrer axialen Erstreckung unterbricht, wobei der mindestens eine Schlitz an dem axialen Ende der Ankermutter mündet, welches näher an dem größeren Durchmesser als an dem kleineren Durchmesser des konusförmigen Auflagebereichs liegt, und sich von dort ausgehend über eine Länge erstreckt, die zwischen 25% und 90% der gesamten axialen Länge der Ankermutter beträgt. Das Außengewinde weist hier allerdings kein Außengewinde auf, so dass es nicht in ein Montageelement eingeschraubt werden kann.

Bei der erfindungsgemäßen Befestigungsvorrichtung mündet der mindestens eine Schlitz, der die Mutterwandung über einen Teilbereich ihrer axialen Erstreckung unterbricht, an dem axialen Ende der Mutter, welches näher an dem Bereich des größeren Durchmessers als an dem Bereich des kleineren Durchmessers des konusförmigen Auflagebereichs liegt, wobei der mindestens eine Schlitz sich von dort ausgehend über eine Länge erstreckt, die zwischen 20% und 95% der gesamten axialen Länge der Mutter beträgt.

Eine derartige Befestigungsvorrichtung ist aus der EP 1 975 422 A1 bekannt.

Weiterhin ist aus der AT 386 444 B ein Ringkeil zum Festlegen von Spanngliedern in einem Anker bekannt.

Die DE 25 37 649 A1 offenbart eine Mutter zur Verankerung eines mit einem Gewinde versehenen Spannstabes für Spannbeton.

Aufgabe der vorliegenden Erfindung ist es, eine preiswert herzustellende und leicht handhabbare Befestigungsvorrichtung der eingangs genannten Art zu schaffen, die bei einfacher Konstruktion eine besonders hohe Tragfähigkeit und verbesserte Festigkeitswerte erreicht.

Diese Aufgabe wird erfindungsgemäß durch eine Befestigungsvorrichtung nach Anspruch 1 gelöst. Vorteilhafte Ausgestaltungen und Weiterbildungen der Erfindung ergeben sich aus den abhängigen Ansprüchen.

Wesentlich bei der erfindungsgemäßen Lösung ist es, dass das Spannelement zumindest in einem Teilbereich ein Außengewinde aufweist, mit dem es in ein Montageelement eingeschraubt werden kann, und dass die Befestigungsvorrichtung zwei insbesondere identisch ausgebildete Muttern und zwei ebenfalls vorzugsweise identisch ausgebildete Spannelemente umfasst, die jeweils paarweise als Kombination einer Mutter und eines Spannelements in der nachfolgend beschriebenen Art zusammenwirken können, wobei zusätzlich ein als Koppelelement dienendes und vorzugsweise rohrförmiges Montageelement vorgesehen ist, welches zwei Innengewindebereiche aufweist, in die jeweils eines der beiden Spannelemente mit seinem jeweiligen Außengewinde eingeschraubt werden kann.

Wenn dabei in jede Mutter jeweils ein Gewindebolzen eingeschraubt wird, und die beiden Spannelemente jeweils in das Koppelelement eingeschraubt werden, sind die beiden Gewindebolzen über die beiden Muttern und die beiden Spannelemente sowie über das dazwischen angeordnete Koppelelement besonders fest miteinander verbunden. Diese Anordnung mit zwei Befestigungsvorrichtungen der vorangehend beschriebenen Art wird auf diese Weise also als System zur Verbindung zweier Gewindebolzen miteinander verwendet, die zumindest im Wesentlichen koaxial hintereinander angeordnet sind.

Das axiale Ende, an dem der Schlitz mündet, wird in der vorliegenden Anmeldung auch als oberes oder oberseitiges Ende der Mutter bezeichnet. Das axial gegenüberliegende andere Ende wird dementsprechend auch unterseitiges Ende oder unteres Ende der Mutter genannt.

Vorzugsweise beträgt die Länge des Schlitzes zwischen 25% und 88% und besonders bevorzugt zwischen 45% und 85% der gesamten axialen Länge der Mutter.

Dadurch, dass sich der die Mutterwandung unterbrechende Schlitz nicht an dem unterseitigen Ende der Mutter, sondern an ihrem oberseitigen Ende befindet, wobei er sich nicht über die gesamte Länge der Mutter erstreckt, können gegenüber den anderen bekannten Ausführungsformen verbesserte Spannungsverteilungen innerhalb der Befestigungsvorrichtung erreicht werden. Aufgrund der besseren Kraftübertragung von der Mutter auf einen eingeschraubten Gewindebolzen sind gesteigerte Traglasten und höhere Festigkeitswerte erzielbar.

Mit zunehmenden Zugkräften eines in die Mutter eingeschraubten Gewindebolzen wird die Mutter zunehmend tiefer in den Innenkonus des Spannelements gezogen, so dass eine erste, radial wirkende Pressung eine zunächst elastische Verformung im unterseitigen, nicht geschlitzten Bereich des Mutternkonus erzwingt, die zu einer weiteren axialen Traglasterhöhung der Mutter führt.

Bei weiterer axialer Laststeigerung beziehungsweise weiterer Belastung auf Zug im Gewindebolzen wird die radial wirkende Pressung weiter erhöht und führt somit zu weiterer elastischer und überlagernd auch zu plastischer Verformung des Mutternkonus, die sich nun über die axiale Länge der Mutter in Richtung zu dem geschlitzten Bereich ausdehnt. Hier steigt der Verformungswiderstand der Mutter gegen die radiale Pressung trotz zunehmenden Durchmessers im Außenkonus nicht weiter mit an, sondern aufgrund der erfindungsgemäß in diesem oberseitigen Bereich angeordneten Schlitze erfolgt insgesamt eine Vergleichmäßigung der spezifischen Flächenpressung durch den Innenkonus des Spannelements auf die gesamte Oberfläche des Mutternkonus, wodurch die Lastkapazität der Mutter erheblich gesteigert wird. Alle Gewinderippen der Mutter werden dann in nahezu gleichem Maße zur Kraftübertragung herangezogen, was bei den vorbekannten Befestigungsvorrichtungen mit Muttern mit unterseitig angeordneten Schlitzen nicht der Fall ist.

Aufgrund der einfachen Konstruktionsweise kann die erfindungsgemäße Befestigungsvorrichtung kostengünstig hergestellt und bei ihrem Einsatz leicht gehandhabt werden.

In vorteilhafter Weise ist die Mutterwandung in dem unterseitigen Bereich des konusförmigen Auflagebereichs, der von dem oberseitigen Ende aus gesehen axial hinter dem mindestens einen Schlitz liegt, über den gesamten Umfang ohne Unterbrechung durchgehend ausgebildet.

Besonders vorteilhaft ist es, wenn der Schlitz oder die Schlitze parallel zu der Schraubachse der Mutter verläuft bzw. verlaufen.

Gemäß einer bevorzugten Ausführungsvariante ist vorgesehen, dass die Umfangsbereiche der Mutterwandung, welche in der Verlängerung des Schlitzes bzw. der Schlitze verbleiben, als Sollbruchstelle(n) ausgebildet sind, die bei Überschreiten einer vorbestimmten Belastung bricht bzw. brechen.

Besonders vorteilhaft ist es, wenn die Mutter mehrere Schlitze aufweist, die umfangsmäßig gleichmäßig verteilt sind. Vorzugsweise sind dabei zwei bis sechs Schlitze, insbesondere vier Schlitze vorgesehen, die sich jeweils paarweise gegenüberliegen.

Besonders günstig ist es ferner, wenn der geschlitzte Bereich am oberseitigen Ende der Mutter beim Anspannen eines in die Mutter eingeschraubten Gewindebolzens durch Eindringen des konusförmigen Auflagebereichs der Mutter in den Innenkonus des Spannelements derart nach innen zusammengedrückt wird, dass sich nicht nur das axiale Gewindespiel, sondern auch das radiale Gewindespiel zwischen der Mutter und dem eingeschraubten Gewindebolzen verringert oder sogar vollständig aufgehoben wird. Hierdurch können einerseits maximale Traglasten und Festigkeitswerte der Befestigungsvorrichtung und andererseits schlupffreie Festlegungen z.B. auch von Bewehrungsstäben in Betonanwendungen erzielt werden.

Gemäß einer vorteilhaften Ausführungsform der Erfindung schließt sich an das oberseitige Ende des konusförmigen Auflagebereichs der Mutter ein Kopfbereich an, dessen Umfangsprofil zur Aufbringung eines Drehmoments in an sich bekannter Weise mit Formschlusselementen, vorzugsweise mit einem Außen-Sechskant ausgebildet ist.

Dabei kann der Kopfbereich nach außen vorstehen und eine unterseitige axiale Anschlagfläche ausbilden, mit der die Mutter zur Anlage an weiteren Montageelementen, insbesondere an einer gelochten Platte, gebracht werden kann. Auch kann die unterseitige Anschlagfläche des Kopfbereichs gegen eine komplementäre Anschlagfläche des Spannelements anschlagen, um durch diesen Formschluss ein weiteres Einziehen des konusförmigen Bereichs der Mutter in den Innenkonus des Spannelements zu verhindern. Hierdurch kann ein definierter Hub der axialen Bewegung der Mutter im Innenkonus des Spannelements und damit auch die Systemnachgiebigkeit definiert begrenzt werden.

Von Vorteil kann es ferner sein, wenn mindestens eine der Kontaktflächen der Konuspaarung zwischen der Mutter und dem Spannelement mit einer reibungsreduzierenden Beschichtung oder mit einem reibungsreduzierenden Einsatz, insbesondere mit einem Nyloneinsatz versehen ist. Hierdurch wird bei gleichem Drehmoment eine höhere Anspannung ermöglicht.

Ein weiterer wesentlicher Vorteil des Außengewindes des Spannelements liegt darin, dass hierüber auch die erreichte Festigkeit der Verbindung getestet werden kann. So besteht beispielsweise die Möglichkeit, an dem Außengewindes des Spannelements eine Auszugvorrichtung anzubringen und hiermit die Zugfestigkeit der durch die Befestigungsvorrichtung erzielten Verbindung an dem Gewindebolzen zu überprüfen.

Vorzugsweise bestehen die Muttern und die zugehörigen Spannelemente sowie das gegebenenfalls zusätzlich vorgesehene rohrförmige Koppelelement oder gegebenenfalls vorgesehene weitere Muttern der Befestigungsvorrichtung jeweils aus einer Metalllegierung. Ein Gewindebolzen oder Anker, an dem die Befestigungsvorrichtung zum Einsatz kommt, kann entweder aus Metall oder vorzugsweise aus faserverstärktem Kunststoff, insbesondere aus Glasfaser-verstärktem Kunststoff (GFK) bestehen.

Weitere Vorteile und Merkmale der Erfindung ergeben sich aus der nachfolgenden Beschreibung und den in den Zeichnungen dargestellten Ausführungsbeispielen. Es zeigen:
- Figur 1:: Querschnitt durch eine erste Ausführungsform einer erfindungsgemäßen Befestigungsvorrichtung der Anordnung aus Figur 3;
- Figur 2:: Querschnitt durch eine erste Ausführungsform einer nicht erfindungsgemäßen Befestigungsvorrichtung;
- Figur 3:: Querschnitt durch eine erfindungsgemäße Anordnung mit zwei Befestigungsvorrichtungen gemäß Figur 1;
- Figur 4:: Ansicht einer Figur 2 entsprechenden Ausführungsvariante einer nicht erfindungsgemäßen Befestigungsvorrichtung;
- Figur 5:: Befestigungsvorrichtung aus Figur 4 an einem Zuganker in gesetztem Zustand;
- Figur 6:: Querschnitt durch eine zweite Ausführungsform einer nicht erfindungsgemäßen Befestigungsvorrichtung; und
- Figur 7:: Ansicht einer Befestigungsvorrichtung gemäß Figur 6.

Die in den Figuren dargestellten Ausführungsbeispiele verschiedener Befestigungsvorrichtungen 1 weisen als wesentliche Bestandteile jeweils eine Mutter 2 und ein zugehöriges Spannelement 3 auf. Jede Befestigungsvorrichtung 1 dient dazu, ein oder mehrere weitere Montagelemente, beispielsweise eine rohrförmige Hülse 4 oder eine zweite Mutter 5, an einem Gewindebolzen 6 zu befestigen. Dazu weist die Mutter 2 eine Gewindebohrung 7 und das Spannelement 3 eine zentral durchgehende Öffnung 8 auf, durch die jeweils ein Gewindebolzen 6 hindurchgeführt werden kann.

Der Körper der Mutter 2 weist einen konusförmigen Auflagebereich 9 auf, der im montierten Zustand in die Öffnung 8 des Spannelements 3 eingreift. Dort liegt der konusförmige Auflagebereich 9 der Mutter 2 an einem komplementären Innenkonus 10 auf, den das Spannelement 3 als Umfangswand der Öffnung 8 aufweist. Sowohl der konusförmige Auflagebereich 9 als auch der Innenkonus 10 sind hier selbsthemmend mit einem Konus-Winkel von 7,5° ausgeführt.

An das oberseitige Ende des konusförmigen Auflagebereichs 9, welches gegenüber dem unterseitigen Ende den größeren Durchmesser aufweist, schließt sich ein Kopfbereich 11 der Mutter 2 an, der für die Montage und zum Aufbringen eines Drehmoments für eine gewünschte Spannung mit einem Außensechskant versehen ist.

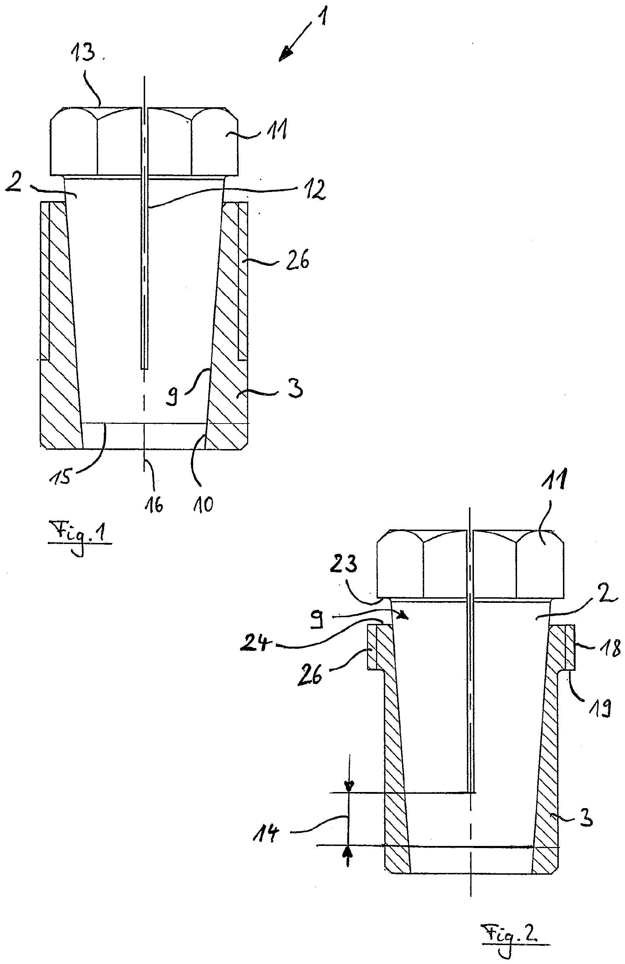

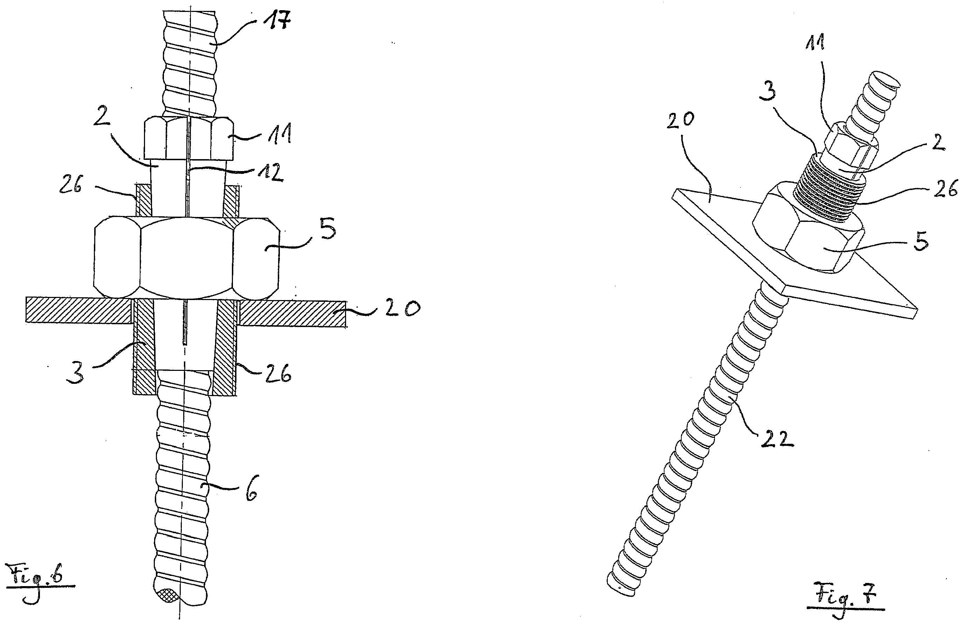

Zur Erhöhung der Tragfähigkeit und zur Erzielung höherer Festigkeitswerte weist die Mutter 2 zwei einander diametral gegenüberliegende, jeweils achsparallel verlaufende Schlitze 12 auf, welche jeweils über die Länge ihrer axialen Erstreckung die Mutterwandung unterbrechen. Erfindungsgemäß sind diese Schlitze 12 so angeordnet, dass sie an dem oberseitigen Ende 13 der Mutter 2 beginnen und in einem deutlichen Abstand 14 von dem unterseitigen Ende 15 der Mutter 2 enden. In den Ausführungsbeispielen der Figuren 1, 2 und 3 erstrecken sich die Schlitze 12 ausgehend von dem oberseitigen Ende 13 über eine Länge, die zwischen 80% und 85% der gesamten axialen Länge der Mutter 2 beträgt. Bei dem Ausführungsbeispiel in Figur 6 erstrecken sich die Schlitze 12 über eine Länge von ungefähr 90% der gesamten axialen Länge der Mutter 2.

Die beiden Schlitze 12 trennen dabei den Kopfbereich 11 sowie einen überwiegenden Teil des konusförmigen Auflagebereichs 9 in zwei Segmente 11a und 11b. Nur das unterseitige Ende des konusförmigen Auflagebereichs 9 mit dem kleineren Durchmesser ist auf einer Höhe 14 von ca. 15% bis 20% der axialen Länge der Mutter 2 über den gesamten Umfang durchgehend ausgebildet.

In Richtung der Längsachse 16 ist die Mutter 2 mit einer durchgehenden Gewindebohrung 7 versehen, deren Innengewinde dem Gewinde 17 des Gewindebolzens 6 angepasst ist. So kann die Mutter 2 zunächst bei geringem Spiel leicht auf den Gewindebolzen 6 aufgeschraubt werden, wohingegen später bei radialer Pressung bzw. Klemmung des konusförmigen Auflagebereichs 9 in dem Innenkonus 10 das Innengewinde der Mutter 2 spiel- und schlupffrei auf dem Gewinde 17 des Gewindebolzens 6 festgelegt wird.

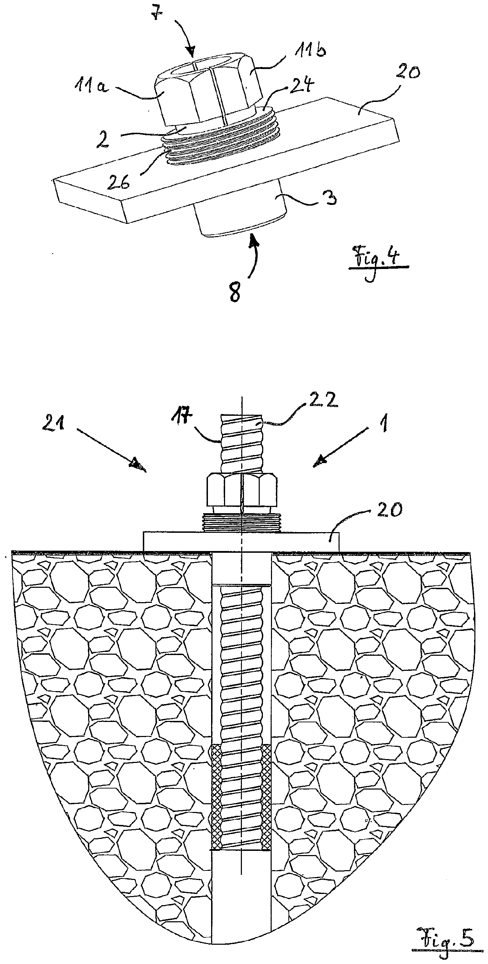

In den Figuren 2, 4 und 5 verfügt das Spannelement 3 an seinem oberseitigen Ende einen radial nach außen vorstehenden Kragen 18, der an seiner unterseitigen Stirnseite eine axiale Anschlagfläche 19 bildet. Diese Anschlagfläche 19 kann sich beispielsweise an einer Ankerplatte 20 abstützen, wenn die Befestigungsvorrichtung für einen Ankerkopf 21 eines Zugankers 22 eingesetzt wird (Figur 5).

Auch der Kopfbereich 11 der Mutter 2 weist an seiner unterseitigen Stirnfläche eine senkrecht zur Längsachse 16 verlaufende Anschlagfläche 23 auf. Diese Anschlagfläche 23 kann gegen eine komplementäre Anschlagfläche 24 anschlagen, die an der Oberseite des Spannelements 3 ausgebildet ist. Durch diesen Formschluss wird dann ein weiteres Einziehen des konusförmigen Auflagebereichs 9 der Mutter 2 in den Innenkonus 10 des Spannelements 3 verhindert.

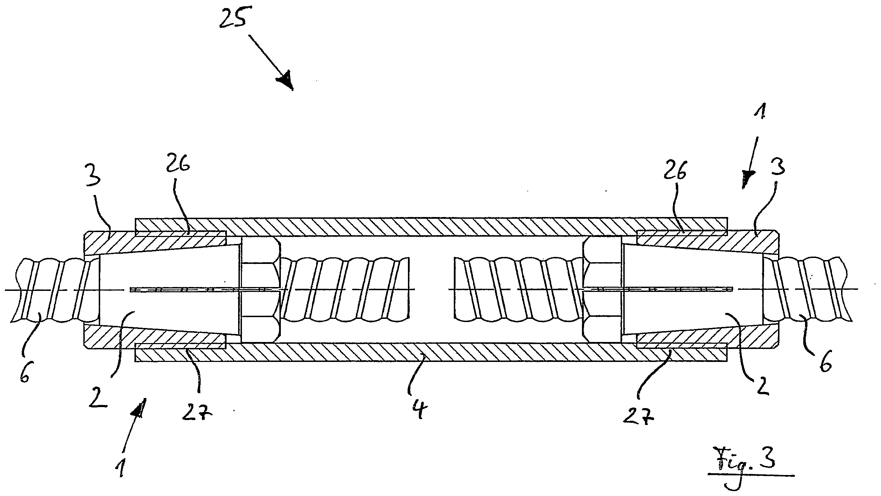

Die in Figur 3 dargestellte erfindungsgemäße Anordnung 25 umfasst zwei identische Befestigungsvorrichtungen 1 aus Figur 1. Sie sind jeweils mit dem Außengewinde 26 des Spannelements 3 in eines von zwei Innengewinden 27 eingeschraubt, die ein rohrförmiges Montageelement 4 an seinen beiden Enden aufweist. Auf diese Weise sind zwei koaxiale Gewindebolzen 6, die in jeweils eine Mutter 2 von einer Befestigungsvorrichtung 1 eingeschraubt sind, über das ein Koppelelement bildende rohrförmige Montageelement 4 hochfest miteinander verbunden. In dem dargestellten Ausführungsbeispiel bestehen sowohl die beiden Muttern 2 und die beiden Spannelemente 3 als auch das rohrförmige Montageelement 4 aus Stahl, wohingegen die beiden Gewindebolzen 6 vorzugsweise aus Glasfaser-verstärktem Kunststoff (GFK) bestehen.

Bei dem in den Figuren 6 und 7 dargestellten Ausführungsbeispiel ist eine zweite Mutter 5, die als äußere Mutter bezeichnet wird, auf das Außengewinde 26 des Spannelements 3 aufgeschraubt. Sie liegt mit ihrer unterseitigen Stirnfläche, die eine axiale Anschlagfläche bildet, an einem plattenförmigen Montageelement, beispielsweise an einer Ankerplatte 20 an. Nachdem die hochfeste Verbindung der Befestigungsvorrichtung 1 mit dem Gewindebolzen 6 bzw. Zuganker 22 hergestellt ist, kann bei dieser Ausführungsform durch nachträgliches Anziehen der äußeren Mutter 5 zusätzliche Spannung aufgebracht werden, die beispielsweise bei einem Zuganker 22 ein einfaches Nachstellen im Falle von Setzerscheinungen erlaubt.

## Patentansprüche

1. Befestigungsvorrichtung (1) zur Befestigung mindestens eines Montageelementes an einem Gewindebolzen (6), umfassend
- eine Mutter (2) mit einer Gewindebohrung (7), und
- ein mit der Mutter (2) zusammenwirkendes Spannelement (3) mit einer Öffnung (8),
wobei die Mutter (2) einen außenseitigen konusförmigen Auflagebereich (9) aufweist, mit dem sie im montierten Zustand zumindest teilweise in die Öffnung (8) des Spannelements (3) eingreift und dort an einem komplementären Innenkonus (10) aufliegt, den das Spannelement (3) aufweist,
und wobei die Mutter (2) mindestens einen Schlitz (12) aufweist, der die Mutterwandung über einen Teilbereich ihrer axialen Erstreckung unterbricht, wobei der mindestens eine Schlitz (12) an dem axialen Ende der Mutter (2) mündet, welches näher an dem größeren Durchmesser als an dem kleineren Durchmesser des konusförmigen Auflagebereichs (9) liegt, und welches als oberseitiges Ende bezeichnet wird,
und wobei der mindestens eine Schlitz (12) sich von dort ausgehend über eine Länge erstreckt, die zwischen 20% und 95% der gesamten axialen Länge der Mutter (2) beträgt,
**dadurch gekennzeichnet,**
**dass** das Spannelement (3) zumindest in einem Teilbereich ein Außengewinde (26) aufweist, mit dem es in ein Montageelement einschraubbar ist, und dass die Befestigungsvorrichtung (1) zwei Muttern (2) und zwei Spannelemente (3) umfasst, die jeweils paarweise zusammenwirken,
wobei sie ein vorzugsweise rohrförmig ausgebildetes Montageelement (4) umfasst, welches zwei Innengewindebereiche (27) aufweist, in die jeweils eines der beiden Spannelemente (3) einschraubbar ist.

2. Befestigungsvorrichtung (1) nach Anspruch 1, **dadurch gekennzeichnet, dass** in jede Mutter (2) jeweils ein Gewindebolzen (6) eingeschraubt ist, und dass die beiden Spannelemente (3) jeweils in das Montageelement (4) eingeschraubt sind, so dass die beiden Gewindebolzen (6) über die beiden Muttern (2), die beiden Spannelemente (3) und das Montageelement (4) miteinander verbunden sind.

3. Befestigungsvorrichtung (1) nach Anspruch 1 oder 2, **dadurch gekennzeichnet, dass** die Mutterwandung in dem Bereich, welcher von dem oberseitigen Ende aus gesehen axial hinter dem mindestens einen Schlitz (12) liegt, unterbrechungsfrei über den gesamten Umfang durchgehend ausgebildet ist.

4. Befestigungsvorrichtung (1) nach einem der Ansprüche 1 bis 3, **dadurch gekennzeichnet, dass** der mindestens eine Schlitz (12) parallel zu der Rotationsachse (16) der Mutter (2) verläuft.

5. Befestigungsvorrichtung (1) nach einem der Ansprüche 1 bis 4, **dadurch gekennzeichnet, dass** die in Verlängerung des mindestens einen Schlitzes (12) verbleibenden Umfangsbereiche der Mutterwandung als Sollbruchstelle ausgebildet sind, die bei Überschreiten einer vorbestimmten Belastung bricht.

6. Befestigungsvorrichtung (1) nach einem der vorherigen Ansprüche, **dadurch gekennzeichnet, dass** die Mutter (2) mehrere Schlitze (12), vorzugsweise zwei bis sechs Schlitze (12) aufweist, die gleichmäßig über den Umfang der Mutterwandung verteilt sind.

7. Befestigungsvorrichtung (1) nach einem der vorherigen Ansprüche, **dadurch gekennzeichnet, dass** der geschlitzte Bereich am oberseitigen Ende der Mutter (2) beim Eindringen des konusförmigen Auflagebereichs (9) in den Innenkonus (10) des Spannelements (3) nach innen zusammendrückbar ist, so dass das radiale und das axiale Gewindespiel zwischen der Mutter (2) und einem in die Mutter (2) einschraubbaren Gewindebolzen (6) verringert ist.

8. Befestigungsvorrichtung (1) nach einem der vorherigen Ansprüche, **dadurch gekennzeichnet, dass** sich an das oberseitige Ende des konusförmigen Auflagebereichs (9) der Mutter (2) ein Kopfbereich (11) mit einem mehrkantigen Umfangsprofil anschließt.

9. Befestigungsvorrichtung (1) nach einem der vorherigen Ansprüche, **dadurch gekennzeichnet, dass** mindestens eine der Kontaktflächen der Konuspaarung (9, 10) zwischen der Mutter (2) und dem Spannelement (3) mit einer reibungsreduzierenden Beschichtung versehen ist.

## Claims

1. A fastening device (1) for fastening at least one mounting element on a threaded bolt (6), comprising
- a nut (2) with a threaded bore (7), and
- a clamping element (3) having an opening (8) and cooperating with the nut (2),
wherein the nut (2) comprises an outside, conical support area (9) with which it engages in the mounted state at least partially into the opening (8) of the clamping element (3) and rests there on a complementary inner cone (10) comprised by the clamping element (3),
and wherein the nut (2) has at least one slot (12) which interrupts the nut wall over a partial area of its axial extension,
wherein the at least one slot (12) empties at the axial end of the nut (2) which is closer to the larger diameter than to the smaller diameter of the conical support area (9), and which is designated as the upper end,
wherein the at least one slot (12) extends starting from there over a length which is between 20% and 95% of the total axial length of the nut (2), **characterized in that**
the clamping element (3) comprises an outer threading (26) at least in a partial area with which it can be screwed into a mounting element,
and that the fastening device (1) comprises two nuts (2) and two clamping elements (3) which cooperate in pairs,
wherein it comprises a preferably tubular mounting element (4) which has two inner threaded areas (27) into which one of the two clamping elements (3) can be screwed.

2. The fastening device (1) according to Claim 1, **characterized in that** a threaded bolt (6) is screwed into each nut (2) and that the two clamping elements (3) are screwed into the mounting element (4) so that the two threaded bolts (6) are connected to one another by the two nuts (2), the two clamping elements (3) and by the coupling element (4).

3. The fastening device (1) according to Claim 1 or 2, **characterized in that** the nut wall, which is located axially behind the at least one slot (12) when viewed from the upper end is constructed continuously over the entire circumference without interruption.

4. The fastening device (1) according to one of Claims 1 to 3, **characterized in that** the at least one slot (12) runs parallel to the axis or rotation (16) of the nut (2).

5. The fastening device (1) according to one of Claims 1 to 4, **characterized in that** the circumferential areas of the nut wall which remain in the prolongation of the at least one slot (12) are constructed as a theoretical breaking position which breaks when a predetermined load is exceeded.

6. The fastening device (1) according to one of the previous claims, **characterized in that** the nut (2) comprises several slots (12), preferably two to six slots (12), which are uniformly distributed along the circumference.

7. The fastening device (1) according to one of the previous claims, **characterized in that** the slotted area on the upper end of the nut (2) can be inwardly compressed during the penetration of the conical support area (9) into the inner cone (10) of the clamping element (3) so that the radial and the axial threading play between the nut (2) and a threaded bolt (6) which can be screwed into the nut (2) are reduced.

8. The fastening device (1) according to one of the previous claims, **characterized in that** a head area (11) with a multi-edge circumferential profile follows the upper end of the conical support area (9) of the nut (2).

9. The fastening device (1) according to one of the previous claims, **characterized in that** at least one of the contact surfaces of the conical pairing (9, 10) between the nut (2) and the clamping element (3) is provided with a friction-reducing coating.

## Revendications

1. Dispositif de fixation (1), destiné à fixer au moins un élément de montage sur un boulon fileté (6), comprenant
- un écrou (2) doté d'un taraudage (7), et
- un élément de serrage (3) coopérant avec l'écrou (2), doté d'un orifice (8),
l'écrou (2) comportant une zone d'appui (9) de forme conique sur sa face extérieure, par laquelle, en position montée, il s'engage au moins en partie dans l'orifice (8) de l'élément de serrage (3) et s'y appuie sur un cône intérieur (10) complémentaire, que comporte l'élément de serrage (3),
et l'écrou (2) comportant au moins une encoche (12) qui interrompt la paroi d'écrou sur une zone partielle de son extension axiale, l'au moins une encoche (12) débouchant sur l'extrémité axiale de l'écrou (2) qui est plus proche du plus grand diamètre que du plus petit diamètre de la zone d'appui (9) de forme conique et qui est appelée extrémité supérieure,
et à partir de là, l'au moins une encoche (12) s'étendant sur une longueur qui s'élève à de 20% à 95% de la longueur axiale totale de l'écrou (2), **caractérisé en ce**
**qu'**au moins dans une zone partielle, l'élément de serrage (3) comporte au moins un filetage extérieur (26) par lequel il peut se visser dans l'élément de montage
et **en ce que** le dispositif de fixation (1) comprend deux écrous (2) et deux éléments de serrage (3) qui coopèrent respectivement par paires,
sachant qu'elle comprend un élément de montage (4) conçu de préférence de forme tubulaire, lequel comporte deux zones de taraudage (27) dans lesquelles peut être vissé respectivement l'un des deux éléments de serrage (3).

2. Dispositif de fixation (1) selon la revendication 1, **caractérisé en ce que** dans chaque écrou (2) est vissé respectivement un boulon fileté (6) et **en ce que** les deux éléments de serrage (3) sont respectivement vissés dans l'élément de montage (4) de sorte que les deux boulons filetés (6) soient assemblés l'un à l'autre par l'intermédiaire des deux écrous (2), des deux éléments de serrage (3) et de l'élément de montage (4).

3. Dispositif de fixation (1) selon la revendication 1 ou 2, **caractérisé en ce que** dans la zone, laquelle, vue à partir de l'extrémité supérieure se situe, en direction axiale derrière l'au moins une encoche (12), la paroi d'écrou est conçue en continu, sans interruption sur toute la périphérie.

4. Dispositif de fixation (1) selon l'une quelconque des revendications 1 à 3, **caractérisé en ce que** l'au moins une encoche (12) s'étend à la parallèle de l'axe de rotation (16) de l'écrou (2).

5. Dispositif de fixation (1) selon l'une quelconque des revendications 1 à 4, **caractérisé en ce que** les zones périphériques de la paroi d'écrou restantes dans le prolongement de l'au moins une encoche (12) sont conçues en tant que point de rupture théorique qui se brise en cas de dépassement d'une contrainte prédéfinie.

6. Dispositif de fixation (1) selon l'une quelconque des revendications précédentes, **caractérisé en ce que** l'écrou (2) comporte plusieurs encoches (12), de préférence de deux à six encoches (12) qui sont régulièrement distribuées sur la périphérie de la paroi d'écrou.

7. Dispositif de fixation (1) selon l'une quelconque des revendications précédentes, **caractérisé en ce que** lors de l'introduction de la zone d'appui (9) de forme conique dans le cône intérieur (10) de l'élément de serrage (3), la zone pourvue d'encoches sur l'extrémité supérieure de l'écrou (2) est compressible vers l'intérieur, de telle sorte que le jeu radial et axial du filetage entre l'écrou (2) et un boulon fileté (6) insérable dans l'écrou (2) soit réduit.

8. Dispositif de fixation (1) selon l'une quelconque des revendications précédentes, **caractérisé en ce que** sur l'extrémité supérieure de la zone d'appui (9) de forme conique de l'écrou (2) se raccorde une zone de tête (11), pourvue d'un profil polygonal.

9. Dispositif de fixation (1) selon l'une quelconque des revendications précédentes, **caractérisé en ce qu'**au moins l'une des surfaces de contact de l'accouplement conique (9, 10) entre l'écrou (2) et l'élément de serrage (3) est munie d'un revêtement réduisant la friction.
